Europäisches Patentamt

European Patent Office

Office européen des brevets

(11) Publication number: **0 157 586**
**B1**

(12) **EUROPEAN PATENT SPECIFICATION**

(45) Date of publication of patent specification: **21.06.89**

(21) Application number: **85302117.8**

(22) Date of filing: **26.03.85**

(51) Int. Cl.⁴: **C 04 B 35/56**

(54) A method for producing sintered silicon carbide articles.

(30) Priority: **26.03.84 JP 57584/84**

(43) Date of publication of application:
**09.10.85 Bulletin 85/41**

(45) Publication of the grant of the patent:
**21.06.89 Bulletin 89/25**

(84) Designated Contracting States:
**CH DE FR GB LI SE**

(56) References cited:
**US-A-4 312 954**

**CHEMICAL ABSTRACTS, vol. 103. no. 8, 26th August 1985, page 260, no. 58031x, Columbus, Ohio, US; & JP - A - 60 36 375 (SUMITOMO ALUMINIUM SMELTING CO. LTD.) 25-02-1985**

(73) Proprietor: **SUMITOMO CHEMICAL COMPANY, LIMITED**
**Kitahama 4-chome 5-33**
**Chuo-ku Osaka 541 (JP)**

(72) Inventor: **Yamada, Koichi**
**8-7 Hoshigoecho**
**Niihama Ehime-ken (JP)**
Inventor: **Mouri, Masahide**
**2-2-237 Ikkucho**
**Niihama Ehime-ken (JP)**
Inventor: **Nomura, Yoshisaburo**
**782-1, Kaburazaki Doi-cho**
**Uma-gun Ehime-ken (JP)**

(74) Representative: **Geering, Keith Edwin et al**
**REDDIE & GROSE 16 Theobalds Road**
**London WC1X 8PL (GB)**

Courier Press, Leamington Spa, England.

**Description**

The present invention relates to a method for producing a sintered silicon carbide article of high sintered density and mechanical strength; the method involves mixing finely divided silicon carbide powder with definite amounts of certain carbon-containing material and of boron-containing component as densification aids, shaping, and then sintering the shaped mixture under an inert atmosphere.

Sintered silicon carbide has excellent physical and chemical properties; in particular it has high hardness and excellent corrosion resistance and its mechanical properties do not change at high temperature as compared with those at normal temperature. Therefore, sintered silicon carbide has been regarded as promising as a wear resistant and high-temperature structural material. However, silicon carbide has been difficult to sinter into a high density article by usual methods. Therefore, sintering by hot press methods and sintering methods using densification aids have been proposed.

For example, in Japanese Patent Laid-Open No. 148712/1976, it is disclosed that a sintered silicon carbide article of high density is produced by mixing 91—99.35 parts by weight of α-type silicon carbide powder having a specific surface area of 1—100 m²/g with 0.67—20 parts by weight of a carbonizable, organic solvent-soluble organic material having a carbonization ratio of 25—75% by weight, a definite amount of a boron compound providing 0.15—3.0 parts by weight of boron component, and 5—15 parts by weight of a binding agent which is consumed under sintering conditions, and then sintering the resulting mixture. However, although a sintered silicon carbide article of high density is obtained by this method, the mechanical strength of the sintered article is not always satisfactory and, for example, a sintered silicon carbide article having a bending strength exceeding 50 kg/mm² could not be obtained by the known methods. In US Patent No. 4312954 there is described a method of pressureless sintering of silicon carbide in an inert gas atmosphere at a temperature of from about 1900°C to about 2500°C to produce ceramic bodies essentially of:

91 to about 99.35% by weight of SiC
0.15 to about 3.0% by weight B
0.5 to about 5.0% by weight uncombined carbon.

The preferred carbon source is phenolic resin. As an alternative, coal tar pitch may be used, and an example is given showing a product having a sintered density of 2.44×10⁶ g/m³ (76% of the theoretical density of silicon carbide).

From extensive study we have found that a sintered silicon carbide article of satisfactory high density and strength can be obtained by mixing finely divided silicon carbide powder with a definite amount of particular carbonaceous component and with a boron-containing component providing less boron than conventionally required for increasing the sintered density, and shaping and then sintering the mixture.

In accordance with the present invention, there is provided a method for producing a sintered silicon carbide article comprising sintering in an inert atmosphere at a temperature of from 1900 to 2300°C a shaped mixture of 100 parts by weight of finely divided silicon carbide powder, tar pitch in an amount to provide 4.2—6 parts by weight of carbon after carbonization and boron-containing component in an amount corresponding to 0.03—0.15 parts by weight of boron.

In the present invention, as finely divided silicon carbide powder, it is suitable to employ a silicon carbide powder having an average particle size of 1 micron or less and consisting essentially of silicon carbide having mainly α crystals of noncubic polytypes, but a silicon carbide powder consisting essentially of β crystal structure silicon carbide or a mixture thereof can be used. These silicon carbides generally include 0.2—2% by weight of free carbon.

In the present invention, tar pitch in such an amount as to provide 4.2—6 parts by weight of carbon after carbonization, and a boron compound in an amount corresponding to 0.03—0.15 parts by weight of boron are added to and mixed with 100 parts by weight of silicon carbide powder. If the amount of tar pitch is less than that giving 4.2 parts by weight of carbon after carbonization, it is impossible to obtain a sintered silicon carbide article having the high sintered density required for desired uses, e.g. mechanical parts. On the other hand, if the amount of tar pitch exceeds the upper limit, the mechanical strength of the sintered article is inadequate and an improvement in mechanical properties is not attained.

Further, if the amount of boron compound provides less than 0.03 parts by weight of boron based on 100 parts by weight of silicon carbide powder, it is impossible to obtain a sintered article having a high sintered density; if the amount of boron compound exceeds the upper limit, it is possible to obtain a sintered article having high sintered density, but the mechanical strength of the sintered article is inadequate.

The tar pitch used in the invention can be commercial coal or oil pitch, and preferred for use is organic solvent-soluble coal tar pitch or oil tar pitch having a carbonization ratio of 40—60% by weight. Further, the boron component used in the invention is not critical but it is preferred to use a boron component which is stable up to the sintering temperature for the present invention and preferred boron components include e.g. boron, boron carbide, and the like.

In the present invention, starting materials comprising the above mentioned amounts of silicon carbide powder, boron component and tar pitch may be mixed uniformly using an organic solvent such as benzene, quinoline, anthracene, or the like or water; the resulting mixture can be shaped by known slip casting methods, or spray dried to obtain a granular mixture which can be press-molded by known methods. In another method, the starting materials are admixed uniformly with an organic binder or water and the admixture is formed into a shaped article by extrusion molding, injection molding or the like. If desired, the shaped mixture is machined or treated to remove binder.

The shaped mixture is sintered in an inert atmosphere, e.g. argon, helium, nitrogen or the like at a temperature of from 1900 to 2300°C, e.g. for a period of from 10 minutes to 10 hours. When the sintering temperature is below 1900°C the resulting sintered article has low sintered density, and when it exceeds 2300°C evaporation of silicon carbide and coarse growth of crystal grains occurs and the resulting sintered article has low mechanical strength, so that such lower and higher sintering temperatures are not preferred.

It is not fully understood why, by the method of the present invention, it is possible to obtain a sintered article having high sintered density and excellent mechanical strength. However, it has been found that during sintering the tar pitch used in the invention is converted into carbon via a liquid phase state whereas a high molecular aromatic compound such as a phenol resin, a polyphenylene resin or the like, or a carbon-containing organic compound such as an aromatic hydrocarbon is, in general, converted via a solid phase state into structurally disordered carbon. It is assumed that, due to this different characteristic of tar pitch, the growth of crystal grains of silicon carbide is restrained and the oxide layer on the surface of a shaped article is removed smoothly in the process of calcining at a temperature of 1200°C or higher. As a result, the sintering takes effect in the presence of smaller amounts of boron as densification aid than in the conventional method when the shaped article of silicon carbide is sintered at a sintering temperature of 1900°C or higher, so that an improvement in mechanical strength without reduction of sintered density can be attained.

By the present invention, it has become possible to produce a high-density, high-strength sintered silicon carbide article having a sintered density of at least 90%, preferably 95% or more, of the theoretical density of the sintered article and a mechanical strength (bending strength) of 50 kg/mm$^2$ or higher.

The present invention is further illustrated by the following non-limiting Examples.

Example 1

After 10 g of coal tar pitch (having a carbon yield of 45% by weight after carbonization) was dissolved in 15 g of quinoline, 200 g of benzene was mixed with the solution. To the solution, 100 g of α-type silicon carbide having a silicon carbide content of 96% by weight and a BET specific surface area of 9 m$^2$/g and 0.15 g of boron carbide powder passing through 1200 mesh were added and they were mixed with and dispersed in the solution using a plastics ball mill for 3 hours. The dispersion was dried at 60°C in a nitrogen gas stream and the resulting powder was pulverized and then sieved with a 180 mesh screen. Then, after the thus obtained pulverized mixed powder was cold pressed, it was charged into a rubber mold and subjected to hydrostatic pressure press compacting under a compacting pressure of 2 tons/cm$^2$ to prepare a green shaped article having dimensions of 50×30×4 mm.

After the said article was calcined at 600°C for 3 hours in an argon gas stream, it was further sintered at 2050°C for 30 minutes in an argon gas atmosphere. The thus obtained sintered article had a sintered density of 3.14 g/cm$^3$ and 3 point bending strength of 60 kg/mm$^2$.

Comparative Example 1

9 g of novolak type phenol resin (having a carbon yield of 50% by weight) was dissolved in 200 g of benzene. Then 100 g of α-type silicon carbide having a silicon carbide content of 96% by weight and a BET specific surface area of 9 m$^2$/g and 0.15 g of boron carbide powder passing through 1200 mesh were added to the solution, and they were mixed with and dispersed in the solution for 3 hours. The dispersion was dried at 60°C in a nitrogen gas stream and after the dried powder was pulverized, it was sieved with a 180 mesh screen. After the obtained pulverized mixed powder was cold pressed, it was charged in a rubber mold and then subjected to hydrostatic pressure press compacting under compacting pressure of 2 tons/cm$^2$ to prepare a green article having dimensions of 50×30×4 mm.

After the green article was calcined at 600°C for 3 hours in an argon gas stream, it was further sintered at 2050°C for 30 minutes in an argon gas atmosphere. The thus obtained sintered article had a sintered density of 2.90 g/cm$^3$ and 3 point bending strength of 30 kg/mm$^2$.

Example 2

For each experiment recorded in Table 1, 100 g of silicon carbide powder having a composition as shown in Table 1 was mixed with the indicated amounts of boron carbide powder passing through 1200 mesh and coal tar pitch having a carbon yield of 45% by weight, the mixture was dried and pulverized, and after the resulting powder was pressed into a shaped article, the green article was calcined as in Example 1. Then, the thus calcined articles were sintered for 30 minutes under temperature conditions as shown in Table 1. The sintered density and bending strength of the thus obtained sintered articles are shown in Table 1, where Experiments 1 and 2 are according to the invention and the rest are for comparison.

# EP 0 157 586 B1

### TABLE 1

| Exper. No. | Silicon carbide powder composition (100 pts by wt) | Boron carbide (parts by wt) | Coal tar pitch (parts by wt) | Sintering temp. (°C) | Sintered density (g/cm$^3$) | Bending strength (kg/mm$^2$) |
|---|---|---|---|---|---|---|
| 1 | α type BET 9 m$^2$/g | 0.1 | 10 | 2050 | 3.14 | 65 |
| 2 | β type BET 15 m$^2$/g | 0.1 | 10 | 2050 | 3.10 | 60 |
| 3 | α type BET 9 m$^2$/g | 0.2 | 10 | 2050 | 3.13 | 40 |
| 4 | α type BET 9 m$^2$/g | 0.02 | 10 | 2050 | 2.80 | 30 |
| 5 | α type BET 9 m$^2$/g | 0.1 | 14 | 2050 | 3.08 | 45 |
| 6 | α type BET 9 m$^2$/g | 0.1 | 3 | 2050 | 2.60 | 25 |
| 7 | α type BET 9 m$^2$/g | 0.1 | 10 | 1800 | 2.40 | 20 |
| 8 | α type BET 9 m$^2$/g | 0.1 | 10 | 2350 | 3.00 | 30 |

As shown in Table 1, it is clear that silicon carbide sintered articles prepared by the method of the invention have high mechanical strength and high sintered density as compared with the sintered articles of the other methods.

### Claims

1. A method for producing a sintered silicon carbide article having a high density by mixing a boron-containing component and carbon-containing material with silicon carbide powder, shaping the mixture and sintering the shaped article under an inert atmosphere at a temperature of 1900—2300°C, characterised in that tar pitch is used as the carbon-containing material in an amount (calculated as carbon) of 4.2—6 parts by weight and the boron-containing component is used in an amount (calculated as boron) of 0.03—0.15 parts by weight based on 100 parts by weight of silicon carbide powder.

2. A method according to claim 1 wherein the finely divided silicon carbide powder has an average particle size of 1 micrometer or less.

3. A method according to claim 1 or 2 wherein the silicon carbide powder is selected from silicon carbide having α crystals of non-cubic polytypes, silicon carbide of β crystal structure, and mixtures thereof.

4. A method according to any preceding claim wherein the tar pitch is an organic solvent-soluble coal tar pitch or oil tar pitch having a carbonization ratio of 40—60% by weight.

5. A method according to any preceding claim wherein the boron-containing component is selected from boron and boron carbide.

6. A method according to any preceding claim wherein the silicon carbide powder, boron-containing component and tar pitch are mixed uniformly using an organic solvent or water and the resulting mixture is shaped by slip casting.

7. A method according to any of claims 1 to 5 wherein the silicon carbide powder, boron-containing component and tar pitch are mixed uniformly using an organic solvent or water and the resulting dispersion is spray dried to obtain a granular mixture which is press-molded into desired shape.

8. A method according to any of claims 1 to 5 wherein the silicon carbide powder, boron-containing component and tar pitch are admixed uniformly with an organic binder or water and the admixture is formed into a shaped article by extrusion molding or injection molding.

9. A method according to any preceding claim wherein the inert atmosphere is selected from argon, helium and nitrogen gas atmosphere.

### Patentansprüche

1. Verfahren zur Herstellung eines gesinterten Siliziumcarbidgegenstandes mit einer hohen Dichte durch Vermischen einer Bor enthaltenden Komponente und eines Kohlenstoff enthaltenden Materials mit Siliziumcarbidpulver, Verformen der Mischung und Sintern des geformten Gegenstandes unter einer inerten Atmosphäre bei einer Temperatur von 1900 bis 2300°C, dadurch gekennzeichnet, daß Teerpech als Kohlenstoff enthaltendes Material in einer Menge (berechnet als Kohlenstoff) von 4,2—6 Gew.-Teilen und die Bor enthaltende Komponente in einer Menge (berechnet als Bor) von 0,03—0,15 Gew.-Teilen, bezogen auf 100 Gew.-Teile des Siliziumcarbidpulvers, verwendet werden.

2. Verfahren nach Anspruch 1, wobei das feinteilige Siliziumcarbidpulver eine durchschnittliche Teilchengröße von 1 µm oder weniger besitzt.

3. Verfahren nach Anspruch 1 oder 2, wobei das Siliziumcarbidpulver ausgewählt wird aus Siliziumcarbid mit α-Kristallen von nichtkubischen Polytypen, Siliziumcarbid von β-Kristallstruktur und Mischungen davon.

4. Verfahren nach einem der vorhergehenden Ansprüche, wobei das Teerpech ein in einem organischen Lösungsmittel lösliches Kohleteerpech oder Ölteerpech mit einem Verkohlungsgrad von 40 bis 60 Gew.-% ist.

5. Verfahren nach einem der vorhergehenden Ansprüche, wobei die Bor enthaltende Komponente aus Bor und Borcarbid ausgewählt wird.

6. Verfahren nach einem der vorhergehenden Ansprüche, wobei das Siliziumcarbidpulver die Bor enthaltende Komponente und das Teerpech gleichmäßig unter Verwendung eines organischen Lösungsmittels oder Wasser vermischt werden und die erhaltene Mischung durch Schlickerguß verformt wird.

7. Verfahren nach einem der Ansprüche 1 bis 5, wobei das Siliziumcarbidpulver, die Bor enthaltende Komponente und das Teerpech gleichmäßig unter Verwendung eines organischen Lösungsmittels oder Wasser vermischt werden und die erhaltende Dispersion zur Gewinnung einer körnigen Mischung sprühgetrocknet wird, die zu der gewünschten Form preßverformt wird.

8. Verfahren nach einem der Ansprüche 1 bis 5, wobei das Siliziumcarbidpulver, die Bor enthaltende Komponente und das Teerpech gleichmäßig mit einem organischen Bindemittel oder Wasser vermischt werden und die Mischung zu einem geformten Gegenstand durch Extrudieren in ein geschlossenes Werkzeug oder durch Spritzgießen verformt wird.

9. Verfahren nach einem der vorhergehenden Ansprüche, wobei die inerte Atmosphäre ausgewählt wird aus einer Argon-, Helium- und Stickstoffgasatmosphäre.

**Revendications**

1. Procédé de production d'un article en carbure de silicium fritté ayant une haute densité, par mélange d'un constituant contenant du bore et d'une matière carbonée avec une poudre de carbure de silicium, façonnage du mélange et frittage de l'article façonné sous atmosphère inerte à une température de 1900 à 2300°C, caractérisé en ce qu'un brai est utilisé comme matière carbonée, en une quantité (calculée sur la base du carbone) de 4,2 à 6 parties en poids et le constituant contenant du bore est utilisé en une quantité (calculée sur la base du bore) de 0,03 à 0,15 partie en poids, sur la base de 100 parties en poids de poudre de carbure de silicium.

2. Procédé suivant la revendication 1, dans lequel la poudre de carbure de silicium finement divisée possède un diamètre moyen de particules égal ou inférieur à 1 micromètre.

3. Procédé suivant la revendication 1 ou 2, dans lequel la poudre de carbure de silicium est choisie entre un carbure de silicium ayant des cristaux α de polytypes non cubiques, un carbure de silicium de structure cristalline β et leurs mélanges.

4. Procédé suivant l'une quelconque des revendications précédentes, dans lequel le brai est un brai de goudron de houille ou un un brai de goudron de pétrole soluble dans les solvants organiques, ayant un taux de carbonisation de 40 à 60% en poids.

5. Procédé suivant l'une quelconque des revendications précédentes, dans lequel le constituant contenant du bore est choisi entre le bore et le carbure de bore.

6. Procédé suivant l'une quelconque des revendications précédentes, dans lequel la poudre de carbure de silicium, le constituant contenant du bore et le brai sont mélangés uniformément en utilisant un solvant organique ou de l'eau et le mélange résultant est façonné par coulée en barbotine.

7. Procédé suivant l'une quelconque des revendications 1 à 5, dans lequel la poudre de carbure de silicium le constituant contenant du bore et le brai sont mélangés uniformément en utilisant un solvant organique ou de l'eau et la dispersion résultante est séchée par pulvérisation pour obtenir un mélange granulaire qui est moulé par compression à la forme désirée.

8. Procédé suivant l'une quelconque des revendications 1 à 5, dans lequel la poudre de carbure de silicium, le constituant contenant du bore et le brai sont mélangés uniformément à un liant organique ou de l'eau et le mélange est mis sous forme d'un article façonné par moulage par extrusion ou moulage par injection.

9. Procédé suivant l'une quelconque des revendications précédentes, dans lequel l'atmosphère inerte est choisie entre une atmosphère d'argon gazeux, d'hélium gazeux et d'azote gazeux.